# EUROPEAN PATENT APPLICATION

(11) **EP 3 842 503 A1**
(43) Date of publication of application: **30.06.2021**
(21) Application number: 19850906.9
(22) Date of filing: 11.07.2019
(51) Int. Cl.: C09J 7/38, C09J 5/08, C09J 133/08, C09J 7/25

(54) **IMPACT-RESISTANT DOUBLE-SIDED TAPE FOR DISPLAY DEVICE**

(30) Priority: 20.08.2018 KR 20180096849
(71) Applicant: Youngwoo Co., Ltd., Gyeonggi-do 18541 (KR)
(72) Inventor: KOO, Tae Wook, Seoul 08795 (KR); KIM, Duck Su, Suwon-si Gyeonggi-do 16392 (KR); JO, Cho Won, Seoul 02461 (KR); HONG, Soon Hwa, Suwon-si Gyeonggi-do 16357 (KR); PARK, Min Soo, Pohang-si Gyeongsangbuk-do 37588 (KR); KIM, Tae Ho, Suwon-si Gyeonggi-do 16317 (KR)
(74) Representative: Zimmermann, Tankred Klaus
(86) International application number: PCT/KR2019/008532
(87) International publication number: WO 2020/040426

(57) **Abstract**

The present disclosure relates generally to a double-sided adhesive tape having improved impact strength for a display device. More particularly, the double-sided adhesive tape includes a base layer, a foam adhesive layer formed on one surface of the base layer and made of acrylic foam, and an adhesive layer formed on the other surface of the base layer. The double-sided adhesive tape having improved impact strength for the display device having the above structure in which the foam adhesive layer having excellent impact strength is formed, thereby suppressing occurrence of cracking on a glass surface of the display device due to external impacts and exhibiting an excellent waterproofing effect.

## Description

### Technical Field

The present disclosure relates generally to a tape having impact strength for a display device. More particularly, the present disclosure relates to a double-sided adhesive tape having improved impact strength for a display device, in which the double-sided adhesive tape includes a foam adhesive layer having excellent impact strength, thereby suppressing occurrence of cracking on a glass surface of the display device due to external impacts and exhibiting an excellent waterproofing effect.

### Background Art

In general, double-sided adhesive tapes are used in display devices to bond and fix various types of display panels, electronic components, and the like. A double-sided adhesive tape may be interposed between a display window and a display assembly to serve to bond the same. As described above, the double-sided adhesive tape can serve to prevent intrusion of external impurities while fixing the edge of a display and also can prevent light emitted from a light source mounted on a rear side of a liquid crystal panel or the like from leaking from the edge of the display.

Conventionally, a double-sided adhesive tape is formed by punching the tape in a shape of a picture frame or the like and is used to be disposed around a display screen. In recent years, with the trend toward miniaturization of electronic devices and use of a large display screen, the area of an opening of the display screen has been increased, and due thereto, a bonding fixing portion around the display screen has become narrower. For this reason, the adhesive tape is decreasing in adhesive area year by year, and as the adhesive area becomes narrower, further excellent adhesive performance is required.

In addition, with the trend toward thin portable electronic devices such as smartphones and digital cameras in recent years, the double-sided adhesive tape has become thinner. Also, as consumer demand for waterproof performance of portable electronic devices increases in addition to adhesive performance, development of double-sided adhesive tapes with waterproof performance is required to secure a competitive advantage in the market.

In addition, the trend toward thin portable electronic devices such as smartphones and digital cameras in recent years has also lead to thinning of a glass surface of a display device, and due thereto, the incidence of cracking on the glass surface of the display device due to external impacts may be increased Therefore, recently, in order to prevent cracking of the glass surface of the display device from occurring due to external impacts, a double-sided adhesive tape to which a foam layer having excellent impact strength is applied between a base layer and an adhesive layer has been manufactured.

However, in the case of the double-sided adhesive tape to which the foam layer is applied between the base layer and the adhesive layer as described above, the adhesive layer and the foam layer have to be formed separately, and thus there is a problem in that a manufacturing process may be complicated and manufacturing cost may be excessively increased.

### Disclosure

### Technical Problem

Accordingly, the present invention has been made keeping in mind the above problems occurring in the related art, and the present invention provides a double-sided adhesive tape having improved impact strength for a display device, in which the double-sided adhesive tape includes a foam adhesive layer having excellent impact strength, thereby suppressing occurrence of cracking on a glass surface of the display device due to external impacts.

### Technical Solution

According to one aspect of the present disclosure, there is provided a double-sided adhesive tape having improved impact strength for a display device, the double-sided adhesive tape including: a base layer; a foam adhesive layer formed on one surface of the base layer and made of an acrylic foam; and an adhesive layer formed on the other surface of the base layer.

According to another aspect of the present disclosure, there is provided a double-sided adhesive tape having improved impact strength for a display device, the double-sided adhesive tape including: a base layer; and a foam adhesive layer formed on each of opposite surfaces of the base layer and made of acrylic foam.

Preferably, the base layer may have a thickness of 12 to 150 micrometers and may be made of one selected from among the group consisting of polyethylene terephthalate, polyurethane, polyethylene naphthalate, and polyimide.

More preferably, the foam adhesive layer may have a thickness of 25 to 150 micrometers.

More preferably, the foam adhesive layer may include 100 parts by weight of an acrylic mixture, 0.01 to 5.0 parts by weight of a foaming agent, 0.01 to 2.0 parts by weight of a curing agent, and 90 to 110 parts by weight of a solvent.

Still more preferably, the acrylic mixture may include 100 parts by weight of normal butyl acrylate, 80 to 100 parts by weight of 2-ethylhexyl acrylate, and 1 to 12 parts by weight of acrylic acid.

### Advantageous Effects

The double-sided adhesive tape having improved impact strength for the display device as described above includes the foam adhesive layer having excellent impact strength. Therefore, it is possible to suppress occurrence of cracking on the glass surface of the display device due to external impacts and can exhibit an excellent waterproofing effect.

### Description of Drawings

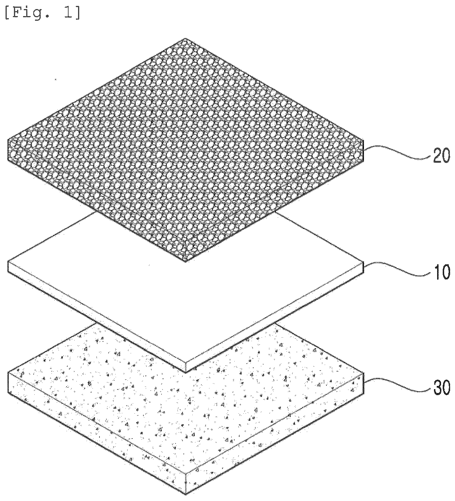

FIG. 1 is an exploded perspective view illustrating a double-sided adhesive tape having improved impact strength for a display device according to an embodiment of the present disclosure.

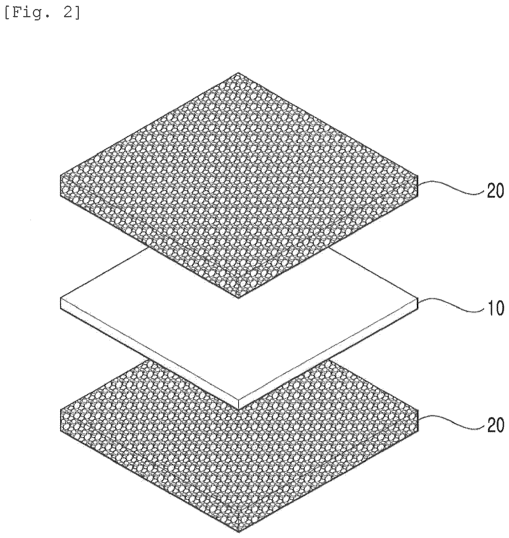

FIG. 2 is an exploded perspective view illustrating a double-sided adhesive tape having improved impact strength for a display device according to another embodiment of the present disclosure.

### Mode for Invention

Hereinafter, exemplary embodiments of the present invention and the physical properties of each component will be described in detail. However, these embodiments are only intended to describe the present invention in detail such that those of ordinary skill in the art to which the present invention belongs can easily carry out the invention and the technical idea and scope of the present invention are not limited by them.

A double-sided adhesive tape having improved impact strength for a display device disclosed herein includes a base layer 10, a foam adhesive layer 20 formed on one surface of the base layer 10 and made of acrylic foam, and an adhesive layer 30 formed on the other surface of the base layer 10.

In addition, the double-sided adhesive tape having improved impact strength for the display device disclosed herein may be used in a form in which the adhesive layer 30 is replaced with the foam adhesive layer 20 and thus foam adhesive layers 20 are formed on opposite surfaces of the base layer 10.

The base layer 10 is a layer serving as a base material of the double-sided adhesive tape having improved impact strength for the display device disclosed herein and has a thickness of 12 to 150 micrometers. The base layer imparts a predetermined shape to the double-sided adhesive tape having improved impact strength for the display device disclosed herein and serves to prevent deformation of the double-sided adhesive tape due to external impacts and impart waterproof performance thereto.

When the thickness of the base layer 10 is less than 12 micrometers, the double-sided adhesive tape may be easily deformed or cracked due to external impacts or tensile force. On the contrary, when the thickness of the base layer 10 is greater than 150 micrometers, the thickness of the double-sided adhesive tape may be excessively increased, making it unsuitable for electronic devices that are miniaturized and thinned.

In addition, it is preferable that the base layer 10 is made of a resin having relatively low cost and excellent mechanical properties, such as polyethylene terephthalate, polyurethane, polyethylene naphthalate, and polyimide.

The foam adhesive layer 20 is formed with a thickness of 25 to 150 micrometers on one surface of the base layer 10 and made of acrylic foam. The foam adhesive layer imparts adhesiveness to the double-sided adhesive tape having improved impact strength for the display device disclosed herein, and serves to suppress occurrence of cracking on a glass surface of the display device due to external impacts by improving impact strength and to impart a waterproofing effect.

Herein, the foam adhesive layer 20 includes 100 parts by weight of an acrylic mixture, 0.01 to 5.0 parts by weight of a foaming agent, 0.01 to 2.0 parts by weight of a curing agent, and 90 to 110 parts by weight of a solvent. It is preferable that the acrylic mixture has a weight average molecular weight of 300000 to 900000 and includes 100 parts by weight of normal butyl acrylates, 80 to 100 parts by weight of 2-ethylhexyl acrylates, and 1 to 12 parts by weight of acrylic acid.

In addition, the foaming agent is not particularly limited as long as being contained in an amount of 0.01 to 5.0 parts by weight and being a component that serves to foam the acrylic mixture to provide a foam adhesive layer 20 exhibiting impact strength, but any one can be used. However, it is preferable to use MSH-320 available from SDI company.

When the amount of the foaming agent is less than 0.01 parts by weight, the foaming efficiency of the foam adhesive layer 20 may be lowered and thus the impact strength may be lowered. On the contrary, when the amount of the foaming agent is greater than 5.0 parts by weight, foaming of the foam adhesive layer 20 may be excessively performed and thus mechanical properties of the foam adhesive layer 20 may be lowered.

In addition, the curing agent is not particularly limited as long as being a component that is capable of curing the acrylic mixture, but any one can be used. However, it is preferable to use isocyanate.

In addition, the solvent is not particularly limited as long as being a component that serves to allow the acrylic mixture and the foaming agent, and the curing agent to be uniformly mixed so as to provide a foam adhesive layer 20 exhibiting homogeneous physical properties, but any one can be used. However, it is preferable to use ethyl ketone.

The foam adhesive layer 20 including the above components is formed in such a manner that the acrylic mixture, foaming agent, the curing agent, and the solvent is mixed, and then a mixture thereof is coated onto one surface of the base layer 10 by a comma coating method to a thickness of 10 to 140 micrometers, while being foamed at a temperature of 170°C to form a foam adhesive layer having a thickness of 25 to 150 micrometers. When the thickness of the foam adhesive layer 20 is less than 25 micrometers, the impact strength of the foam adhesive layer 20 may be lowered, and when the thickness of the foam adhesive layer 20 is greater than 150 micrometers, mechanical properties thereof may be lowered.

The adhesive layer 30 is formed on the other surface of the base layer 10 to a thickness of 25 to 150 micrometers in such a manner that a mixture of 100 parts by weight of an acrylic mixture, 0.01 to 2.0 parts by weight of a curing agent, and 90 to 110 parts by weight of a solvent is coated onto the other surface of the base layer 10 by a comma coating method to a thickness of 25 to 150 micrometers. The adhesive layer serves to impart adhesion to the double-sided adhesive tape having improved impact strength for the display device disclosed herein.

Herein, the critical meaning according to the specific components and amount of the acrylic mixture, the curing agent, and the solvent is the same as the acrylic mixture, the curing agent, and the solvent used in the foam adhesive layer 20, and thus a detailed description thereof will be omitted.

When the thickness of the adhesive layer 30 is less than 25 micrometers, the adhesive performance and impact strength may be lowered. On the contrary, when the thickness of the adhesive layer 30 is greater than 150 micrometers, the adhesive performance may not be significantly improved, but the thickness of the double-sided adhesive tape may be excessively increased, making it unsuitable for electronic devices that are miniaturized and thinned.

Hereinafter, a method of manufacturing a double-sided adhesive tape having improved impact strength for a display device disclosed herein, and the physical properties of a double-side tape manufactured thereby will be described with reference to examples.

### <Example 1>

A double-sided adhesive tape having improved impact strength for a display device was manufactured by a process in which: a base layer was formed of a 50 micron thick polyethylene terephthalate film; a mixture of 100 parts by weight of an acrylic mixture (prepared by polymerizing 100 parts by weight of normal butyl acrylate, 90 parts by weight of 2-ethylhexyl acrylate, and 10 parts by weight of acrylic acid, and having a weight average molecular weight of 700,000), 1 part by weight of a foaming agent (MSH-320 available from SDI company), 1 part by weight of a curing agent (isocyanate), and 100 parts by weight of a solvent (methylethyl ketone) was coated onto one surface of the base layer by a comma coating method to a thickness of 90 micrometers, while being foamed at a temperature of 170°C to form a foam adhesive layer having a thickness of 100 micrometers; and a mixture of 100 parts by weight of an acrylic mixture (prepared by mixing 100 parts by weight of normal butyl acrylate, 90 parts by weight of 2-ethylhexyl acrylate, and 10 parts by weight of acrylic acid, and having a weight average molecular weight of 700,000), 1 part by weight of a curing agent (isocyanate), and 100 parts by weight of a solvent (methylethyl ketone) was coated onto the other surfaces of the base layer by a comma coating method to a thickness of 100 micrometers to form an adhesive layer.

### <Example 2>

A double-sided adhesive tape having improved impact strength for a display device was manufactured by a process in which: a base layer was formed of a 50 micron thick polyethylene terephthalate film; and a mixture of 100 parts by weight of an acrylic mixture (prepared by polymerizing 100 parts by weight of normal butyl acrylate, 90 parts by weight of 2-ethylhexyl acrylate, and 10 parts by weight of acrylic acid, and having a weight average molecular weight of 700,000), 1 part by weight of a foaming agent (MSH-320 available from SDI company), 1 part by weight of a curing agent (isocyanate), and 100 parts by weight of a solvent (methylethyl ketone) was coated onto each of opposite surfaces of the base layer by a comma coating method to a thickness of 90 micrometers, while being foamed at a temperature of 170°C to form foam adhesive layers each of which has a thickness of 100 micrometers.

### <Comparative Example 1>

A double-sided adhesive tape having improved impact strength for a display device was manufactured by a process in which: a base layer was formed of a 50 micron thick polyethylene terephthalate film; a mixture of 100 parts by weight of a urethane resin (prepared by polymerizing 70 parts by weight of polytetramethylene ether glycol and 30 parts by weight of isophorone diisocyanate, and having a weight average molecular weight of 110,000), 100 parts by weight of a solvent (methylethyl ketone), 1 part by weight of a foaming agent (MSH-320 available from SDI company), and 1 part by weight of a curing agent (isocyanate) was coated onto one surface of the base layer by a comma coating method to a thickness of 40 micrometers and dried at 100°C to remove the solvent component; a coating layer from which the solvent component was removed was foamed at 170°C to form a foam layer having a thickness of 50 µm); and a mixture of 100 parts by weight of an acrylic resin (prepared by polymerizing 50 parts by weight of normal butyl acrylate, 45 parts by weight of 2-ethylhexyl acrylate, and 5 parts by weight of acrylic acid, and having a weight average molecular weight of 700000), 1 part by weight of a curing agent (isocyanate), and 100 parts by weight of a solvent (methylethyl ketone) was coated on each of upper and lower surfaces of the base layer on which the foam layer is formed by a comma coating method to a thickness of 75 micrometers to form adhesive layers.

### <Comparative Example 2>

A double-sided adhesive tape having improved impact strength for a display device was manufactured in the same manner as in the Comparative Example 1, except that a foam layer using an acrylic resin was further formed on a lower surface of a base layer and adhesive layers having a thickness of 50 micrometers were formed on an upper surface and the lower surface of the base layer.

### <Comparative Example 3>

A double-sided adhesive tape having improved impact strength for a display device was manufactured in the same manner as in the Comparative Example 2, except that a foam adhesive layer as in the Example 1 was formed on one surface of a base layer to a thickness of 50 micrometers and an adhesive layer as formed on a lower surface of the base layer in the Comparative Example 2 was formed to a thickness of 50 micrometers.

### <Comparative Example 4>

A double-sided adhesive tape having improved impact strength for a display device was manufactured in the same manner as in the Comparative Example 3, except that a foam adhesive layer as in the Example 1 was also formed on the other surface of a base layer.

### <Comparative Example 5>

A double-sided adhesive tape having improved impact strength for a display device was manufactured in the same manner as in the Example 1, except that a foam adhesive layer formed on one surface of a base layer was replaced with an adhesive layer.

### <Comparative Example 6>

A double-sided adhesive tape having improved impact strength for a display device was manufactured by a process in which a foam adhesive layer as in the Example 1 was formed to a thickness of 50 micrometers to form a base layer, and an adhesive layer as in the Example 1 was formed on each of opposite surfaces of the base layer.

After applying the double-sided adhesive tape having improved impact strength for the display device manufactured through each of the Examples 1 to 2 and the Comparative Examples 1 to 6 to a display's glass surface, physical properties thereof were measured and shown in Table 1 below.

### (However, the physical properties is composed of prevention of breakage of the display's glass surface, reworkability and residue evaluation, and waterproof performance evaluation)

The effect of preventing breakage of the display's glass surface was measured using a method of measuring the number of times the display's glass surface was broken by placing a steel plate and an SUS plate on an impact measuring sensor, sampling each of the double-sided adhesive tapes manufactured in Examples 1 to 2 and Comparative Examples 1 to 6 to prepare samples having a thickness of 100 µm and a size of 10 cm in width × 10 cm in length, and attaching one surface of each of the samples to the display's glass surface (tempered glass) and attaching other side to the surface of the SUS plate, and dropping 16g and 30g steel balls at a 100 cm height.

In addition, in the reworkability and residue evaluation, reworkability was measured using a method of cutting each of the double-sided adhesive tapes manufactured in Examples 1 to 2 and Comparative Examples 1 to 6 into a size of 25 mm in width × 150 mm in length and attaching each of cut double-sided adhesive tapes to a display's glass surface (tempered glass) having a size of 70 mm in width × 200 mm in length, and when the double-sided adhesive tape was removed from the display's glass surface after 72 hours at room temperature, marking as "OK" when the double-sided adhesive tape was removed without breaking and marking as "NG" when breakage occurred. The residue was measured using a method of visually observing the display's glass surface after the above process, and when an adhesive remained on the glass surface, marking as residue presence.

In addition, the waterproof performance was measured using a method of cutting of each of the double-sided adhesive tapes manufactured in Examples 1 to 2 and Comparative Examples 1 to 6 to a size of 48 mm in width × 48 mm in length then cutting the inside of each of cut double-sided adhesive tapes into a size of 47.3 mm in width × 47.3 mm in length to prepare square frame-shaped samples having a frame width of 0.7 mm, attaching each of the samples onto a polycarbonate (PC) plate having the same size as a magnesium (Mg) plate in 60 mm in width × 60 mm in length × 6.5 mm in thickness, and attaching a glass plate in 50 mm in width × 50 mm in length × 2.8 mm in thickness. The prepared samples were left at 24°C for 72 hours and then placed in a water tank filled with 2 m of water, and after 144 hours, the samples were collected to visually check for leakage. Leak-free samples were marked Pass and leaked samples were marked NG.

**Table 1**

| Classification | | Example 1 | Example 2 | Comparative example 1 | Comparative example 2 | Comparative example 3 | Comparative example 4 | Comparative example 5 | Comparative example 6 |
|---|---|---|---|---|---|---|---|---|---|
| Drop impact glass breakage prevention (Count) | 16g | 4 | 5 | 4 | 4 | 5 | 5 | 1 | 2 |
| | 30g | 3 | 3 | 2 | 3 | 3 | 4 | 1 | 1 |
| Reworkability | | OK | OK | OK | OK | OK | OK | OK | NG |
| Residue | | None | None | None | None | None | None | None | Presence |
| Waterproof (IPX 8) | | Pass | Pass | Pass | Pass | Pass | Pass | Pass | Pass |

As illustrated in Table 1 above, it can be seen that the double-sided adhesive tapes having improved impact strength for the display devices manufactured through the Examples 1 to 2 have excellent physical properties such as a glass breakage prevention effect, reworkability, reduced residue, and waterproof performance when compared to the double-sided adhesive tapes having improved impact strength for the display devices manufactured through Comparative Examples 1 to 6.

### <Description of the Reference Numerals in the Drawings>

10; base layer
20; foam adhesive layer
30; adhesive layer

### Industrial Applicability

The present invention can be used as a double-sided adhesive tape for bonding and fixing display panels, electronic components, and the like to protect displays and electronic products against impacts.

## Claims

1. A double-sided adhesive tape having improved impact strength for a display device, the double-sided adhesive tape comprising:
a base layer;
a foam adhesive layer formed on one surface of the base layer and made of an acrylic foam; and
an adhesive layer formed on the other surface of the base layer.

2. A double-sided adhesive tape having improved impact strength for a display device, the double-sided adhesive tape comprising:
a base layer; and
a foam adhesive layer formed on each of opposite surfaces of the base layer and made of acrylic foam.

3. The double-sided adhesive tape of claim 1 or 2, wherein the base layer has a thickness of 12 to 150 micrometers and is made of one selected from among the group consisting of polyethylene terephthalate, polyurethane, polyethylene naphthalate, and polyimide.

4. The double-sided adhesive tape of claim 1 or 2, wherein the foam adhesive layer has a thickness of 25 to 150 micrometers.

5. The double-sided adhesive tape of claim 1 or 2, wherein the foam adhesive layer includes 100 parts by weight of an acrylic mixture, 0.01 to 5.0 parts by weight of a foaming agent, 0.01 to 2.0 parts by weight of a curing agent, and 90 to 110 parts by weight of a solvent.

6. The double-sided adhesive tape of claim 5, wherein the acrylic mixture includes 100 parts by weight of normal butyl acrylate, 80 to 100 parts by weight of 2-ethylhexyl acrylate, and 1 to 12 parts by weight of acrylic acid.
